# EUROPEAN PATENT APPLICATION

(11) **EP 4 653 975 A1**
(43) Date of publication of application: **26.11.2025**
(21) Application number: 23916964.2
(22) Date of filing: 24.05.2023
(51) Int. Cl.: G05D 23/24

(54) **HOT SURFACE IGNITER TEMPERATURE CONTROL SYSTEM AND METHOD BASED ON THERMAL RESISTANCE MEASUREMENT**

(30) Priority: 17.01.2023 CN 202310062757
(71) Applicant: CHONGQING LE-MARK TECHNOLOGY CO., LTD., Jiulongpo District Chongqing 401329 (CN)
(72) Inventor: LEIGH, Peter, Chongqing 401329 (CN)
(74) Representative: Pons IP
(86) International application number: PCT/CN2023/096028
(87) International publication number: WO 2024/152491

(57) **Abstract**

A hot surface igniter temperature control system and method based on thermal resistance measurement. The control system comprises: a power supply module,; a control module, configured to control the power supply module; a measurement module, configured to measure a resistance value of the hot surface igniter; a storage module, provided with a resistance-temperature table and a preset temperature value in advance; a calculation module, configured to match a corresponding actual temperature value from the resistance-temperature table prestored; and a comparison module, configured to compare the temperature values and obtain a temperature difference value. The calculation module is further configured to obtain a voltage control quantity according to the temperature difference value; and the control module controls the power supply output of the power supply module according to the voltage control quantity until a calculated actual temperature value matches the preset temperature value, thereby realizing more accurate temperature adjustment.

## Description

### TECHNICAL FIELD

The present disclosure relates to a temperature control technique, and in particular, to a hot surface igniter temperature control system and method based on thermal resistance measurement.

### BACKGROUND

Electric sparks occurring in a high-frequency ignition process may easily result in unsafe combustion and explosion conditions. A hot surface ignition technique used by a hot surface igniter can allow combustible gas/fuel to enter a combustion area after the hot surface igniter has reached a high temperature in advance, thereby completely avoiding potential problems caused by the electric sparks. Therefore, the hot surface igniter has gradually begun to replace the traditional high-frequency igniter.

At present, the temperature that the hot surface igniter can reach during use is related to the magnitude of a voltage across two ends of the hot surface igniter. Therefore, in order to enable the hot surface igniter to reach a temperature required by a user, it is necessary to adjust a power supply voltage of the hot surface igniter. However, in practice, on the one hand, in order to bring the hot surface igniter to the required temperature quickly, the supply voltage of the hot surface igniter is usually increased; whereas in order to minimize damage to the hot surface igniter, it is necessary to timely reduce and adjust the supply voltage once the required temperature is reached. On the other hand, since the hot surface igniter needs to reach different temperatures under different application operating conditions, it is necessary to adjust the supply voltage according to the temperature.

Chinese patent document no. CN 1640195 B discloses a voltage adjustment system and method for a resistance igniter. In said system and method, a line voltage of the system is determined and a voltage applied to the resistance igniter is controlled, such that a first voltage initially applied is maintained for a period of time, after which a second voltage is applied, the second voltage being a rated voltage of the igniter. In said system and method, a line voltage of the system is determined and a voltage applied to the resistance igniter is controlled, such that a first voltage initially applied is maintained for a period of time, after which a second voltage is applied, the second voltage being a rated voltage of the igniter. Said system and method reduce the time required for heating the resistance igniter to a temperature sufficient to ignite a gas while adjusting an output voltage supplied to the igniter to prevent damage to the igniter caused by overvoltage. Said system and method reduce the time required for heating the resistance igniter to a temperature sufficient to ignite a gas while adjusting an output voltage supplied to the igniter to prevent damage to the igniter caused by overvoltage.

The drawbacks are: in this invention, the output voltage is measured, but an actual voltage supplied to the hot surface igniter in the entire circuit is not exactly equal to the output voltage, it is inaccurate to use the output voltage to characterize the voltage of the hot surface igniter, causing an incorrect voltage to be supplied to the hot surface igniter, which in turn leads to inaccurate temperature control of the hot surface igniter.

### SUMMARY

In order to solve the problem of inaccurate temperature control of a hot surface igniter in the prior art, the present disclosure provides a hot surface igniter temperature control system based on thermal resistance measurement, said system comprising: a power supply module, configured to supply power to the hot surface igniter; and
a control module, configured to control an output voltage of the power supply module;
wherein said system further comprises a measurement module, configured to measure and obtain a resistance value of the hot surface igniter;
a storage module in which a resistance-temperature table and a preset temperature value are preset;
a calculation module, configured to match, according to the resistance value, a corresponding actual temperature value from the electronic-temperature table prestored in the storage module; and
a comparison module, configured to compare the actual temperature value with the preset temperature value and obtain a temperature difference value;
the calculation module is further configured to obtain a voltage control quantity according to the temperature difference value; and the control module is configured to control a power supply output of the power supply module according to the voltage control quantity until a calculated actual temperature value matches the preset temperature value.

In this solution, after the resistance value of the hot surface igniter is measured using the measurement module, a temperature value is looked up from the preset resistance value-temperature table by the calculation module. Compared with the prior art, the resistance value obtained in this solution is closer to the resistance value of the hot surface igniter itself, and therefore, the obtained temperature value is more accurate. After the temperature difference value between the temperature value and the preset temperature value is obtained by the calculation module, the voltage control quantity is obtained. Finally, the power supply output is adjusted by the control module according to the voltage control quantity, achieving more accurate temperature adjustment.

Preferably, the measurement module is configured to measure a terminal voltage and a current of the hot surface igniter, and the calculation module is configured to obtain the resistance value of the hot surface igniter according to the terminal voltage and the current.

Preferably, the measurement module is integrated with a current measurement circuit for acquiring a current value of the hot surface igniter and a terminal voltage measurement circuit for acquiring a voltage value of the hot surface igniter.

Preferably, the current measurement circuit comprises a first sampling resistor connected to a positive voltage terminal of supplied power of the power supply module and to one electrode of the hot surface igniter, and a first amplifier circuit for amplifying a voltage of the first sampling resistor, the other electrode of the hot surface igniter being electrically connected to a negative voltage terminal of the power supply module. In this solution, when power is supplied to the hot surface igniter, the current flowing through the hot surface igniter will flow in a direction of flowing through the positive voltage terminal of supplied power, the first sampling resistor, the one electrode of the hot surface igniter, the hot surface igniter, and the other electrode of the hot surface igniter, and finally returning to the negative voltage terminal of the supplied power. The current flowing through the hot surface igniter may be converted into a small voltage by the first sampling resistor. After amplification by the first amplifier circuit, a voltage Vrt linearly related to the current flowing through the hot surface igniter is outputted. Finally, the processing module calculates the present current value of the hot surface igniter according to the proportional relationship between the voltage Vrt and the current of the hot surface igniter. The structure is simple.

Preferably, the terminal voltage measurement circuit comprises a positive voltage terminal of supplied power, a second sampling resistor, a third sampling resistor, and a negative voltage terminal of the supplied power that are sequentially connected in series, as well as a second amplifier circuit for amplifying a terminal voltage of the third sampling resistor, the second sampling resistor and the third sampling resistor being connected in series with each other and then being connected in parallel with the hot surface igniter. In this solution, the second sampling resistor and the third sampling resistor are connected in series, and the hot surface igniter is connected in parallel with the series-connected second sampling resistor and third sampling resistor, and thus after acquiring the terminal voltage of the third sampling resistor using the second amplifier circuit, the present voltage value of the hot surface igniter may be calculated according to the proportional relationship between the terminal voltage of the third sampling resistor and the terminal voltage of the hot surface igniter. The structure is simple.

Preferably, the calculation module calculates the temperature difference value using PID operation and obtains the voltage control quantity. In this solution, the voltage control quantity is obtained using the PID operation, and a temperature deviation can be effectively corrected, such that the temperature reaches a stable state.

In a second aspect, the present disclosure provides a temperature control method using the hot surface igniter temperature control system based on thermal resistance measurement according to any one above, said method comprising the following steps:
a power supply step: supplying power to the hot surface igniter; and
a control step: controlling an output voltage;
wherein said method further comprises the following steps:
   a measurement step: measuring a resistance value of the hot surface igniter;
   a calculation step: matching a corresponding actual temperature value from a prestored electronic-temperature table according to the resistance value; and
   a feedback step: comparing the actual temperature value with the preset temperature value and obtaining a temperature difference value, obtaining a voltage control quantity according to the temperature difference value and feeding the voltage control quantity back to the control step, wherein in the control step, the output voltage is controlled according to the fed back voltage control quantity until a calculated actual temperature value matches the preset temperature value.

The present disclosure has the following advantageous effects:
1. Compared with the prior art, in the present disclosure, the present temperature of the hot surface igniter is obtained by measuring the voltage and current values of the hot surface igniter, and then the voltage control quantity is obtained according to the temperature difference value between the present temperature and the preset temperature value and is fed back to the control module, thereby achieving control on the voltage of the hot surface igniter, such that the temperature control is more accurate.

### BRIEF DESCRIPTION OF THE DRAWINGS

FIG. 1 is a block diagram of modules of an embodiment of a hot surface igniter temperature control system and method based on thermal resistance measurement of the present disclosure;
FIG. 2 is a circuit diagram of an H-bridge driving circuit;
FIG. 3 is a diagram of a current measurement circuit; and
FIG. 4 is a diagram of a terminal voltage measurement circuit.

### DETAILED DESCRIPTION OF THE EMBODIMENTS

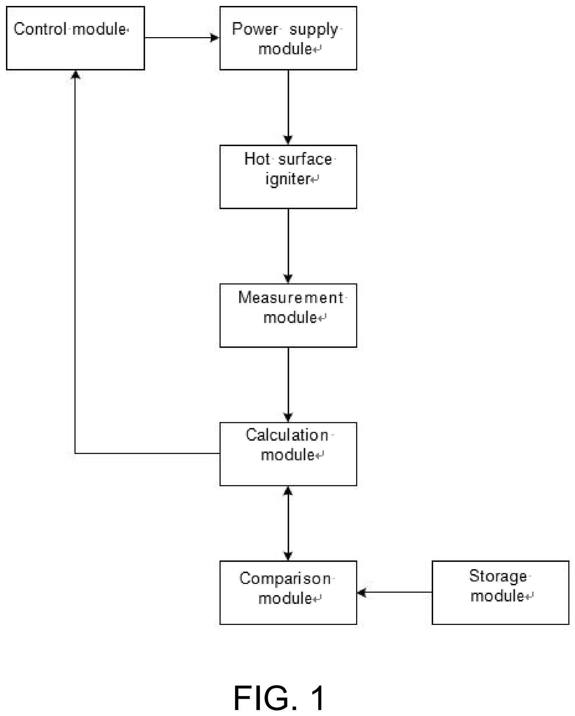

Further detailed description is made below in combination with specific embodiments:
1. Definition
   PID operation: it is a very classic algorithm among control algorithms and has been widely applied to the industrial control field as a typical closed-loop control algorithm (i.e. with negative feedback regulation). The PID algorithm is composed of P (proportional regulation), I (integral regulation), and D (differential regulation).
2. An embodiment is substantially as shown in FIG. 1: a hot surface igniter temperature control system based on thermal resistance measurement comprises: a power supply module, configured to supply power to a hot surface igniter;
   a control module, configured to control an output voltage of the power supply module;
   a measurement module, configured to measure a resistance value of the hot surface igniter; in particular, the measurement of the resistance value in the present embodiment is obtained by measuring a terminal voltage and a current of the hot surface igniter; the measurement module is integrated with a current measurement circuit for acquiring a current value of the hot surface igniter and a terminal voltage measurement circuit for acquiring a voltage value of the hot surface igniter. In particular, the current measurement circuit comprises a first sampling resistor connected to a positive voltage terminal of supplied power of the power supply module and to one electrode of the hot surface igniter, and a first amplifier circuit for amplifying a voltage of the first sampling resistor, the other electrode of the hot surface igniter being electrically connected to a negative voltage terminal of the power supply module. The terminal voltage measurement circuit comprises a positive voltage terminal of supplied power, a second sampling resistor, a third sampling resistor, and a negative voltage terminal of the supplied power that are sequentially connected in series, as well as a second amplifier circuit for amplifying a terminal voltage of the third sampling resistor, the second sampling resistor and the third sampling resistor being connected in series with each other and then being also connected in parallel with the hot surface igniter.

A storage module in which a resistance-temperature table and a preset temperature value are preset;
a calculation module, configured to obtain the resistance value of the hot surface igniter according to the terminal voltage and the current, and match, after obtaining the resistance value, a corresponding actual temperature value from the electronic-temperature table prestored in the storage module; and
a comparison module, configured to compare the actual temperature value with the preset temperature value and obtain a temperature difference value;
wherein the calculation module is further configured to calculate the temperature difference value using PID operation and obtain a voltage control quantity, and the control module is configured to control a power supply output of the power supply module according to the voltage control quantity until a calculated actual temperature value matches the preset temperature value.

This embodiment further discloses a temperature control method of a hot surface igniter temperature control system based on thermal resistance measurement, said method comprising the following steps:
a power supply step: supplying power to the hot surface igniter;
a control step: controlling an output voltage;
a measurement step: measuring a resistance value of the hot surface igniter, particularly a terminal voltage and a current of the hot surface igniter;
a calculation step: obtaining the resistance value of the hot surface igniter according to the terminal voltage and the current, and matching a corresponding actual temperature value from a prestored electronic-temperature table after obtaining the resistance value; and
a feedback step: comparing the actual temperature value with the preset temperature value and obtaining a temperature difference value, obtaining a voltage control quantity according to the temperature difference value and feeding the voltage control quantity back to the control step, wherein in the control step, the output voltage is controlled according to the fed back voltage control quantity until a calculated actual temperature value matches the preset temperature value.

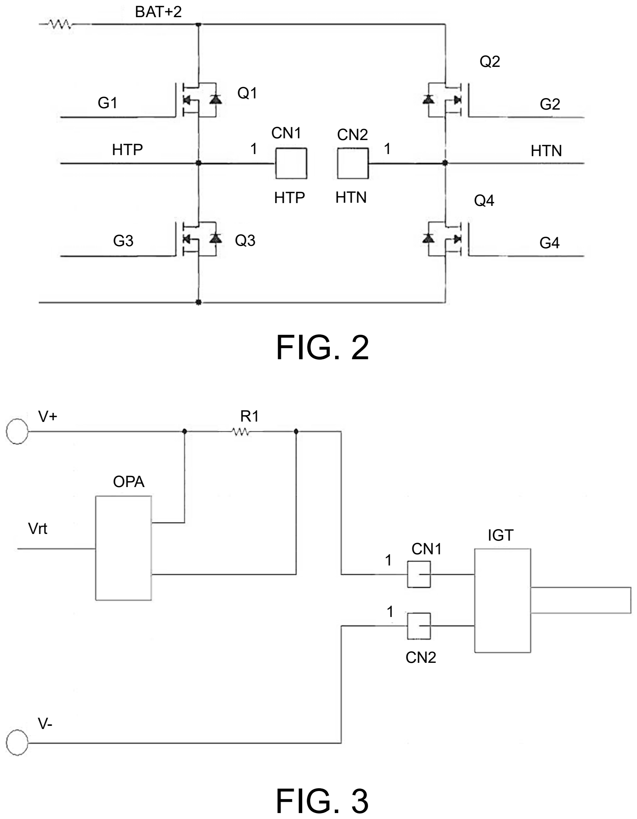

The specific implementation process is as follows: in this embodiment, the power supply module supplies power to the hot surface igniter on the basis of a PWM pulse square wave voltage. When power is supplied, an H-bridge driving circuit is also used to drive to reverse the current flowing through the hot surface igniter, as shown in FIG. 2; wherein CN1 and CN2 of the H-bridge driving circuit are connection points of the two electrodes of the hot surface igniter, and the driving circuit comprises four MOSFETs Q1, Q4, Q2, and Q3, which are turned on and off in a preset sequence to achieve the reversal of the current flowing through the hot surface igniter.

When measuring the current of the hot surface igniter, as shown in FIG. 3, IGT represents the hot surface igniter, R1 represents the first sampling resistor, OPA represents the first amplifier circuit, and V+ and V- represent the positive voltage terminal and the negative voltage terminal of the supplied power of the hot surface igniter, respectively. When power is supplied to the hot surface igniter IGT, the current I flowing through the hot surface igniter IGT will flow in a direction flowing through V+, R1, CN1, the hot surface igniter IGT, and CN2, and finally returning to V-. The current flowing through the hot surface igniter IGT can be converted into a small voltage by the first sampling resistor R1. After amplifying by the first amplifier circuit OPA, a voltage Vrt linearly related to the current I flowing through the hot surface igniter is outputted, and the voltage Vrt is sent to the processing module. The processing module calculates the present current value of the hot surface igniter IGT according to the proportional relationship between the voltage Vrt and the current of the hot surface igniter IGT.

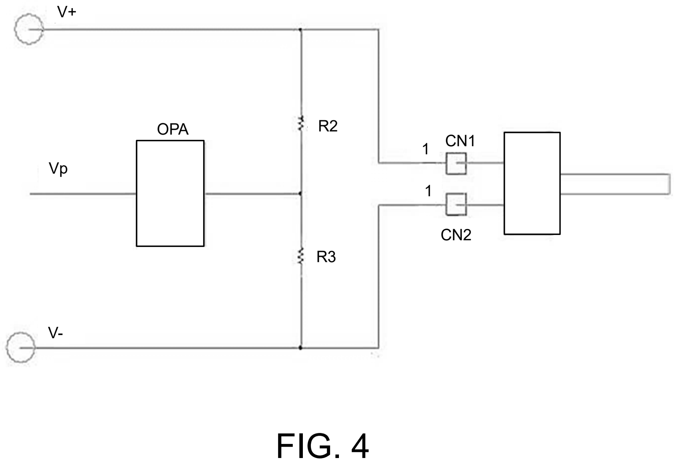

When measuring the voltage of the hot surface igniter, the terminal voltage measurement circuit shown in FIG. 4 may acquire a voltage value Vp representing the magnitude of the terminal voltage, and send the voltage value Vp to the processing module. The processing module calculates the present terminal voltage of the hot surface igniter according to the proportional relationship between the voltage value Vp and the terminal voltage of the hot surface igniter IGT. Finally, the processing module may calculate the present resistance value (i.e. thermal resistance) Rt of the hot surface igniter according to the measured voltage and current of the hot surface igniter. Then, the processing module may look up the temperature value corresponding to the resistance value from the preset resistance-temperature table according to the obtained resistance value.

After the actual temperature value is obtained, firstly, the comparison module obtains the temperature difference value according to the preset temperature value. The obtained temperature difference value is subjected to the PID operation by the calculation module to obtain the voltage control quantity which is fed back to the control module. The control module adjusts the output voltage according to the voltage control quantity. The measurement module then measures a new current value and a new voltage value. The calculation is repeated in this way. Finally, the temperature of the hot surface igniter is controlled at a set temperature value.

In the process above, the specific process of adjusting the output voltage uses the control technique provided in available patent documents filed by our company. In particular, in an example based on the PWM pulse square wave voltage, when a rising edge of a PWM voltage acting upon the hot surface igniter arrives, the measurement module measures the voltage and the current of the hot surface igniter. Then, after calculating the voltage control quantity, the control module makes adjustment according to the voltage control quantity. During the adjustment, the ratio of a Ton period and a Toff period of the PWM pulse square wave voltage is adjusted according to the voltage control quantity, such that the hot surface igniter is supplied with a suitable voltage to ensure that the hot surface igniter works at the preset temperature value.

In other embodiments, the power supply module may supply power in a steady direct-current power supply mode. In this power supply mode, the temperature of the hot surface igniter is adjusted by adjusting a power supply duration. In particular, after the power supply module applies a voltage to the hot surface igniter for a period of time, the power supply module stops supplying power. At this time, the measurement module measures the present current and voltage of the hot surface igniter, and the control module then controls the power supply duration of the power supply module according to the voltage control quantity. In this mode, the voltage supplied to the hot surface igniter is turned off periodically for a very short time, e.g., off for 0.1 ms, and the measurement and calculation of the voltage control quantity are performed during 0.1 ms. The power supply module then immediately starts to supply power. Since the hot surface igniter has certain thermal inertia, this very short turn-off time may not affect the temperature continuity of the igniter. Thus, a normal temperature rise of the hot surface igniter can be ensured.

The content as described above merely relates to embodiments of the present disclosure, and common general knowledge such as well-known specific structures and characteristics in the solution is not redundantly described herein. A person of ordinary skill in the art would have been aware of all common technical knowledge in the technical field to which the present disclosure belongs before the filing date or the priority date, and would have access to all the prior art in the field, and have the capacity to apply routine experimental means before the date. Under the motivation provided in the present application, a person of ordinary skill in the art would have been able to improve and implement the present solution in combination with the capability thereof. Some typical well-known structures or well-known methods should not be obstacles for a person of ordinary skill in the art to implement the present application. It should be noted that, for a person skilled in the art, various modifications and improvements can also be made without departing from the structure of the present disclosure, and these modifications and improvements shall also be considered as belonging to the scope of protection of the present disclosure; and these modifications and improvements all do not affect the effect of implementation of the present disclosure and the applicability of the patent. The scope of protection of the present application shall be subject to the content of the claims, and the disclosure of specific embodiments and the like in the description can be used to interpret the content of the claims.

## Claims

1. A hot surface igniter temperature control system based on thermal resistance measurement, said system comprising: a power supply module, configured to supply power to the hot surface igniter; and
a control module, configured to control an output voltage of the power supply module;
wherein said system further comprises: a measurement module, configured to measure and obtain a resistance value of the hot surface igniter;
a storage module in which a resistance-temperature table and a preset temperature value are preset;
a calculation module, configured to match, according to the resistance value, a corresponding actual temperature value from the electronic-temperature table prestored in the storage module; and
a comparison module, configured to compare the actual temperature value with the preset temperature value and obtain a temperature difference value;
wherein the calculation module is further configured to obtain a voltage control quantity according to the temperature difference value; and the control module is configured to control a power supply output of the power supply module according to the voltage control quantity until a calculated actual temperature value matches the preset temperature value.

2. The hot surface igniter temperature control system based on thermal resistance measurement according to claim 1, wherein the measurement module is configured to measure a terminal voltage and a current of the hot surface igniter; and the calculation module is configured to obtain the resistance value of the hot surface igniter according to the terminal voltage and the current.

3. The hot surface igniter temperature control system based on thermal resistance measurement according to claim 2, wherein the measurement module is integrated with a current measurement circuit for acquiring a current value of the hot surface igniter and a terminal voltage measurement circuit for acquiring a voltage value of the hot surface igniter.

4. The hot surface igniter temperature control system based on thermal resistance measurement according to claim 3, wherein the current measurement circuit comprises a first sampling resistor connected to a positive voltage terminal of supplied power of the power supply module and to one electrode of the hot surface igniter, and a first amplifier circuit for amplifying a voltage of the first sampling resistor, the other electrode of the hot surface igniter being electrically connected to a negative voltage terminal of the power supply module

5. The hot surface igniter temperature control system based on thermal resistance measurement according to claim 3 or 4, wherein the terminal voltage measurement circuit comprises a positive voltage terminal of supplied power, a second sampling resistor, a third sampling resistor, and a negative voltage terminal of the supplied power that are sequentially connected in series, as well as a second amplifier circuit for amplifying a terminal voltage of the third sampling resistor, the second sampling resistor and the third sampling resistor being connected in series with each other and then being connected in parallel with the hot surface igniter.

6. The hot surface igniter temperature control system based on thermal resistance measurement according to claim 5, wherein the calculation module calculates the temperature difference value using PID operation and obtains the voltage control quantity.

7. A temperature control method using the hot surface igniter temperature control system based on thermal resistance measurement according to any one of claims 1-6, said method comprising the following steps:
a power supply step: supplying power to the hot surface igniter; and
a control step: controlling an output voltage;
wherein said method further comprises the following steps:
a measurement step: measuring a resistance value of the hot surface igniter;
a calculation step: matching a corresponding actual temperature value from a prestored electronic-temperature table according to the resistance value; and
a feedback step: comparing the actual temperature value with the preset temperature value and obtaining a temperature difference value, obtaining a voltage control quantity according to the temperature difference value and feeding the voltage control quantity back to the control step, wherein in the control step, the output voltage is controlled according to the fed back voltage control quantity until a calculated actual temperature value matches the preset temperature value.
